# EUROPÄISCHE PATENTSCHRIFT

(11) **EP 0 345 440 B1**
(45) Veröffentlichungstag und Bekanntmachung des Hinweises auf die Patenterteilung: **31.03.1993**
(21) Anmeldenummer: 89106704.3
(22) Anmeldetag: 14.04.1989
(51) Int. Cl.: B65G 47/90, B65B 21/12

(54) **Greifvorrichtung für Flaschen und dergl.**
Gripper device for bottles and the like
Dispositif de préhension pour bouteilles et similaires

(30) Priorität: 09.06.1988 DE 3819598
(43) Veröffentlichungstag der Anmeldung: 13.12.1989
(73) Patentinhaber: RICO-MASCHINENBAU MAX APPEL KG, D-73431 Aalen (DE)
(72) Erfinder: Rietzler, Erich, D-7081 Hüttlingen (DE)
(74) Vertreter: Fay, Hermann, Dipl.-Phys. Dr.

(56) Entgegenhaltungen:
- DE-B- 1 096 824
- FR-A- 1 044 075
- GB-A- 747 138
- GB-A- 1 001 327

## Beschreibung

Die Erfindung betrifft eine Greifvorrichtung für Flaschen und dergl., insbesondere für Flaschen mit einem Kronen-oder Schraubverschluß, mit einem Packkopf und mehreren daran angeschlossenen Packtulpen, die jeweils eine Aufnahmeöffnung für die zu greifende Flasche sowie einen in der Aufnahmeöffnung umfangsseitig angeordneten elastischen Packtulpeneinsatz aufweisen, der zum Klemmen der Flasche radial in die lichte Querschnittsfläche der Aufnahmeöffnung vorverstellbar ist, wobei im Tulpengehäuse der Packtulpe auf der dem freien Öffnungsrand der Aufnahmeöffnung abgewandten Seite ein axial verschiebbarer Stellkolben vorgesehen ist, an dessen zur Aufnahmeöffnung weisender Stirnfläche einerseits und einem radial einwärts am freien Öffnungsrand vorstehenden Ringwulst andererseits der Packtulpeneinsatz axial anliegt und an dessen der Aufnahmeöffnung entgegengesetzter Seite ein das Tulpengehäuse stirnseitig schließender Aufnahmeflansch angeordnet ist, der mit dem Tulpengehäuse fest verbunden, dabei gegen dieses abgedichtet und mit einer Einlaßöffnung für ein gasförmiges oder flüssiges Druckmedium zur Verstellung des Stellkolbens versehen ist.

Bei einer aus der FR-A-1 044 075 bekannten Greifvorrichtung dieser Art besteht der Packtulpeneinsatz aus einer massiven Hülse aus verformbarem Material. Beim axialen Zusammendrücken des Rings weicht das Material nach innen aus und legt sich dabei dem Flaschenhals an. Der hierdurch erreichbare Verstellweg ist jedoch relativ klein, da die Hülse von drei Seiten vollständig umfaßt ist, so daß zunächst nur das durch elastische Verformung der Hülse in deren lichten Öffnungsquerschnitt hinein verlagerte Volumen zum Andrücken an den Flaschenhals zur Verfügung steht. Daher muß der Innendurchmesser der jeweils verwendeten Hülse sehr genau an den Durchmesser des Flaschenhalses angepaßt sein. Bei entsprechender Erhöhung des axialen Drucks auf die Hülse tritt in Folge deren relativ großer axialer Länge ein unkontrollierbares Einknicken auf, wodurch die Flaschen nicht mehr zentriert gehalten werden.

Weiter ist aus der GB-A-747 138 eine Packtulpe bekannt, die ebenfalls einen hülsenförmigen Packtulpeneinsatz aufweist. Dieser ist an seiner Außenseite mit einer Ringnut versehen, wodurch der Packtulpeneinsatz in seinem mittleren Bereich eine dünnere Wandstärke aufweist. Dieser Bereich verstellt sich unter axialem Druck auf den Packtulpeneinsatz radial nach innen und greift in eine am Flaschenhals vorgesehene Ringnut. Der Anwendungsbereich dieser Packtulpe ist damit beschränkt auf Flaschen mit speziell angepaßter Halsform, also keineswegs darauf eingerichtet, Flaschen mit unterschiedlichem Halsdurchmesser zu greifen.

Der Erfindung liegt die Aufgabe zugrunde, eine Greifvorrichtung der eingangs genannten Art so auszubilden, daß bei einem möglichst einfachen Aufbau und hoher Betriebszuverlässigkeit mit der Folge geringer Wartungszeiten eine leichte Verformbarkeit der Packtulpeneinsätze gegeben ist.

Diese Aufgabe wird nach einem ersten Lösungsweg gemäß Anspruch 1 bei einer Greifvorrichtung, bei der der Packtulpeneinsatz von einer im wesentlichen zylindrische Gestalt aufweisenden Hülse gebildet ist, dadurch gelöst, daß der Packtulpeneinsatz mit mehreren, über den Umfang gleichmäßig verteilt angeordneten Durchbrüchen versehen ist.

Der durch die Erfindung erreichte Vorteil besteht zunächst darin, daß die Durchbrüche den Bereich festlegen, in welchen die Einschnürung des Packtulpeneinsatzes zum Klemmen des Flaschenhalses erfolgen soll, da der Packtulpeneinsatz dort die geringste Steifigkeit aufweist. Da die Durchbrüche gleichmäßig über den Umfang verteilt angeordnet sind, wird darüber hinaus eine koaxiale Verformung erreicht, so daß die Flaschen im Umfang des möglichen Durchmesserbereiches stets zentriert in den Packtulpen gehalten werden. Schließlich ermöglichen die Durchbrüche einen Druckausgleich zu dem durch die Verformung aufgespannten Ringraum zwischen der Wand des Tulpengehäuses und ihrer Außenfläche.

Um die radial einwärts gerichtete Verformung zu fördern, sieht die Erfindung in vorteilhafter Weiterbildung vor, daß der Packtulpeneinsatz sich von seinen beiden Stirnseiten aus in seiner Querschnittsfläche geringfügig verjüngt, so daß er die Gestalt zweier kegelstumpfförmiger Hülsenteile mit kleinem Kegelwinkel aufweist, wobei die beiden Hülsenteile an ihrer jeweils kleineren Querschnittsfläche aneinandergrenzen und dort eine Sollbiegelinie bilden und wobei die Durchbrüche im wesentlichen symmetrisch zur Sollbiegelinie angeordnet sind. Diese Sollbiegelinie kann entsprechend dem von der Greifvorrichtung zu befördernden Gut durch einfachen Austausch des Packtulpeneinsatzes beliebig gewählt werden. In weiter bevorzugter Ausführungsform der Erfindung ist die Sollbiegelinie jedoch in der zum Öffnungsrand weisenden Hälfte des Packtulpeneinsatzes angeordnet. Dadurch ist sicher gestellt, daß bei der Verwendung von Kronen- oder Schraubverschlüssen zum Schließen der Flasche diese unterhalb des Verschlusses von dem Packtulpeneinatz umgriffen werden. Hierbei empfiehlt es sich weiter, daß der Packtulpeneinsatz drei Durchbrüche von kreisförmiger Form oder Längsnuten besitzt, deren Durchmesser etwa ein Sechstel der Umfangslänge des Packtulpeneinsatzes beträgt.

Ein zweiter Lösungweg der der Erfindung zugrunde liegenden Aufgabe nach dem Anspruch 5 ist dadurch gekennzeichnet, daß der Packtulpeneinsatz von mehreren, sich in axialer Richtung erstreckenden Lamellenteilen gebildet ist.

Die Lamellenteile sind dabei zweckmäßigerweise als Zylinderschalen ausgebildet, deren Zylinderachse parallel zur Achse der Aufnahmeöffnung verläuft und deren konkave Fläche ebenfalls zur Achse der Aufnahmeöffnung weist, wobei die Zylinderschalen im Querschnitt etwa die Gestalt eines Drittelkreises besitzen, deren Durchmesser so gewählt ist, daß die jeweils Anlagelinien an der Flasche bildenden Längsränder gleichmäßig über den Umfang der Aufnahmeöffnung verteilt angeordnet sind. In jedem Fall wird hierdurch erreicht, daß der mit Druck beaufschlagte Packtulpeneinsatz etwa über seine halbe axiale Länge an der Flasche zur Anlage kommt. Dadurch ist auch ein Pendeln der Flaschen während der Bewegung zu einem Kasten bzw. von einem Kasten zu einem Transportband weitgehend ausgeschlossen. Als weiterer Vorteil ergibt sich, daß die Stanniolierung am Flaschenhals durch die Greifertulpe nicht beschädigt wird.

Der Stellkolben ist vorteilhafterweise von einer Kolbenplatte mit einem zum Öffnungsrand weisenden Ringflansch gebildet, wobei der Packtulpeneinsatz radial innenseitig dem Ringflansch anliegt, und wobei auf der der Aufnahmeöffnung abgewandten Seite der Kolbenplatte eine durch ein axial zentral angeordnetes, mit dem Stellkolben festverbundenes Spannstück gehaltene Topfmanschette angeordnet ist. Dadurch ist auch eine Reibung zwischen dem Packtulpeneinsatz und dem Tulpengehäuse ausgeschlossen.

Am Tulpengehäuse ist zweckmäßigerweise auf der dem Öffnungsrand zugewandten Seite des Stellkolbens ein radial nach innen vorstehender Ringvorsprung angeordnet, der einen Anschlag für den Stellkolben bildet. Dies ist insbesondere dann erforderlich, wenn durch einen fehlerhaften Betriebsablauf keine Flasche in die Aufnahmeöffnung der Packtulpe gelangt ist, so daß eine übermäßige Veformung des Packtulpeneinsatzes vermieden wird.

Auf der der Aufnahmeöffnung entgegengesetzten Seite des Stellkolbens ist ein das Tulpengehäuse stirnseitig schließender Aufnahmeflansch angeordnet, der mit diesem fest verbunden, gegen diesen durch einen Dichtungsring abgedichtet und mit einer Einlaßöffnung für ein gasförmiges oder flüssiges Druckmedium zur Verstellung des Stellkolbens versehen ist.

Im folgenden wird die Erfindung an einem in der Zeichnung dargestellten Ausführungsbeispiel näher erläutert; es zeigen:
- Fig. 1: den Gegenstand nach der Erfindung im Längsschnitt,
- Fig. 2: den Packtulpeneinsatz nach Fig. 1 im Längsschnitt,
- Fig. 3: einen Querschnitt durch den Gegenstand nach Fig. 2 längs der Linie III-III,
- Fig. 4: eine weitere Ausführungsform des Packtulpeneinsatzes in der Fig. 3 entsprechender Darstellung,

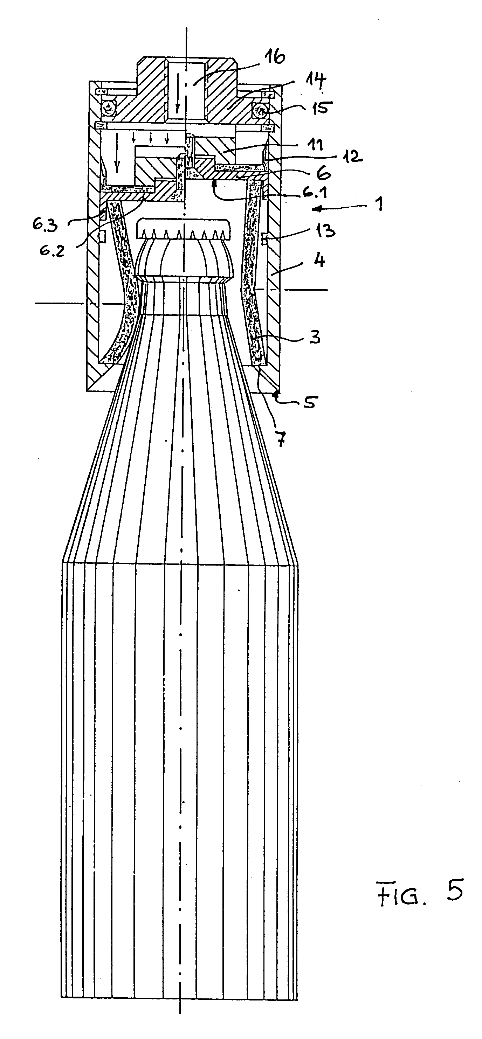

- Fig. 5: eine im wesentlichen der Fig. 1 entsprechende Darstellung des Gegenstands nach der Erfindung, mit eingesetzter Flasche, wobei der Packtulpeneinsatz links druckbeaufschlagt ist, rechts dagegen nicht.

Die in der Zeichnung nicht näher dargestellte Greifvorrichtung für Flaschen und dergl. dient dazu, auf einem Transportband angelieferte Flaschen zu mehreren mittels eines Packkopfes in entsprechende Kasten oder Kartons umzusetzen oder in entsprechend umgekehrtem Arbeitsablauf aus diesen zu entnehmen und auf einem Transportband abzusetzen. Dazu ist der Packkopf mit mehreren daran angeschlossenen Packtulpen 1 versehen, die jeweils eine Aufnahmeöffnung 2 für die zu greifende Flasche aufweisen. In der Aufnahmeöffnung 2 ist jeweils ein umfangsseitig angeordneter elastischer Packtulpeneinsatz 3 vorgesehen, der zum Klemmen der Flasche radial in die lichte Querschnittsfläche der Aufnahmeöffnung 2 vorverstellbar ist. Hierzu ist im Tulpengehäuse 4 der Packtulpe 1 auf der dem freien Öffnungsrand 5 der Aufnahmeöffnung 2 abgewandten Seite ein axial verschiebbarer Stellkolben 6 vorgesehen, an dessen zur Aufnahmeöffnung 2 weisender Stirnfläche 6.1 einerseits und einem radial einwärts am freien Öffnungsrand 5 vorstehenden Ringwulst 7 andererseits der Packtulpeneinsatz 3 axial anliegt.

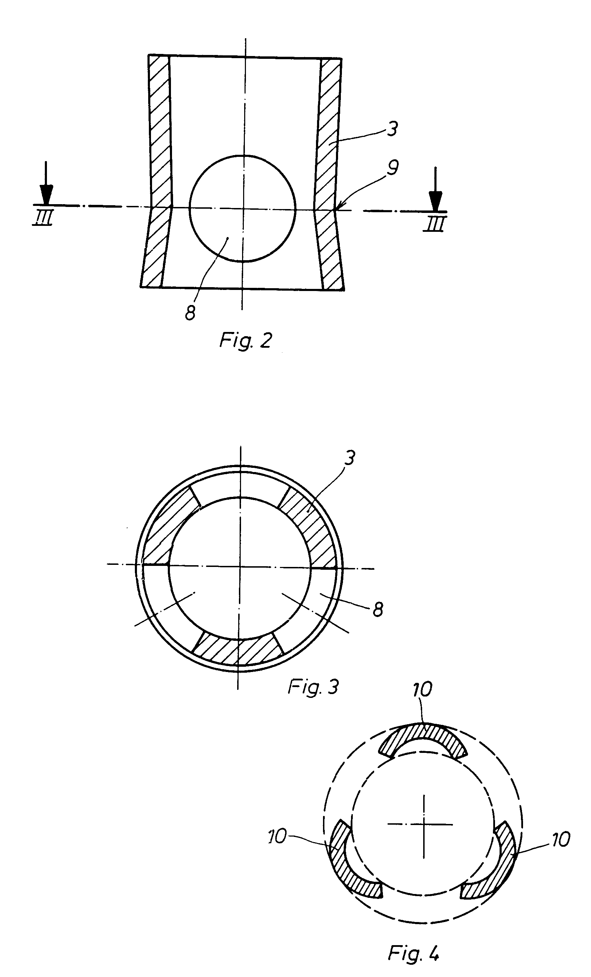

Der Packtulpeneinsatz 3 ist im einzelnen von einer im wesentlichen zylindrische Gestalt aufweisenden Hülse gebildet, die mit mehreren, über den Umfang gleichmäßig verteilt angeordneten Durchbrüchen 8 versehen ist. Wie sich insbesondere aus der Fig. 2 ergibt, verjüngt sich der Packtulpeneinsatz 3 in seiner Querschnittsfläche von seinen beiden Stirnseiten aus zur Mitte hin geringfügig, so daß er die Gestalt zweier kegelstumpfförmiger Hülsenteile mit kleinem Kegelwinkel besitzt. Dabei grenzen die beiden Hülsenteile an ihrer jeweils kleineren Querschnittsfläche aneinander und bilden dort eine Sollbiegelinie 9. Die Durchbrüche 8 sind dabei im wesentlichen symmetrisch zur Sollbiegelinie 9 angeordnet.

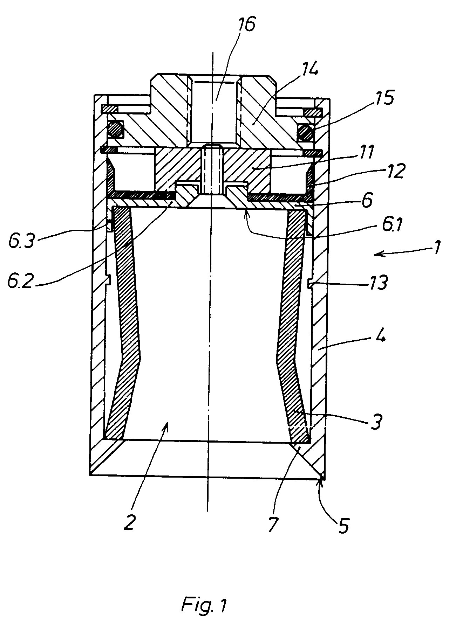

Wie die Fig. 1 und 2 weiter zeigen, ist die Sollbiegelinie 9 in der zum Öffnungsrand 5 weisenden Hälfte des Packtulpeneinsatzes 3 angeordnet. Im einzelnen besitzt der Packtulpeneinsatz 3 drei Durchbrüche 8 von kreis- oder nutenförmiger Gestalt, deren Durchmesser etwa ein Sechstel der Umfangsfläche des Packtulpeneinsatzes 3 beträgt.

Der Packtulpeneinsatz 3 kann jedoch entsprechend der Fig. 4 auch von mehreren, sich in axialer Richtung erstreckenden Lamellenteilen 10 gebildet sein. Die Lamellenteile 10 sind dann zweckmäßigerweise als Zylinderschalen ausgebildet, deren Zylinderachse parallel zur Achse der Aufnahmeöffnung 2 verläuft und deren konkave Fläche ebenfalls zur Achse der Aufnahmeöffnung 2 weist. Die Lamellenteile 10 besitzen im Querschnitt etwa die Gestalt eines Drittelkreises, dessen Durchmesser so gewählt ist, daß die jeweils Anlagelinien an der Flasche bildenden Längsränder gleichmäßig über den Umfang der Aufnahmeöffnung 2 verteilt angeordnet sind. Auf diese Weise wird eine besonders zuverlässige Halterung der Flasche in der Aufnahmeöffnung 2 erreicht.

Der Stellkolben 6 ist von einer Kolbenplatte 6.2 mit einem zum Öffnungsrand 5 weisenden Ringflansch 6.3 gebildet. Der Packtulpeneinsatz 3 liegt dabei dem Ringflansch 6.3 radial innenseitig an. Auf der der Aufnahmeöffnung 5 abgewandten Seite der Kolbenplatte 6.2 ist eine durch ein axial zentral angeordnetes, mit dem Stellkolben 6 fest verbundenes Spannstück 11 gehaltene Topfmanschette 12 angeordnet.

Um eine übermäßige Verformung des Packtulpeneinsatzes 3 zu vermeiden, wenn etwa durch einen fehlerhaften Betriebsablauf keine Flasche in die Aufnahmeöffnung 2 gelangt ist, ist am Tulpengehäuse 4 auf der dem Öffnungsrand 5 zugewandten Seite des Stellkolbens 6 ein radial nach innen vorstehender Ringvorsprung 13 angeordnet, der einen Anschlag für den Stellkolben 6 bildet.

Auf der der Aufnahmeöffnung 2 entgegengesetzten Seite des Stellkolbens 6 ist ein das Tulpengehäuse 4 stirnseitig schließender Aufnahmeflansch 14 angeordnet, der mit diesem fest verbunden und gegen diesen durch einen Dichtungsring 15 abgedichtet ist. Der Aufnahmeflansch 14 ist mit einer Einlaßöffnung 16 für ein gasförmiges oder flüssiges Druckmedium versehen, über das der Stellkolben 6 zum Öffnungsrand 5 hin verstellt werden kann.

## Patentansprüche

1. Greifvorrichtung für Flaschen und dergl., insbesondere für Flaschen mit einem Kronen- oder Schraubverschluß, mit einem Packkopf und mehreren daran angeschlossenen Packtulpen (1), die jeweils eine Aufnahmeöffnung (2) für die zu greifende Flasche sowie einen in der Aufnahmeöffnung (2) umfangsseitig angeordneten elastischen Packtulpeneinsatz (3) aufweisen, der zum Klemmen der Flasche radial in die lichte Querschnittsfläche der Aufnahmeöffnung (2) vorverstellbar ist, wobei im Tulpengehäuse (4) der Packtulpe (1) auf der dem freien Öffnungsrand (5) der Aufnahmeöffnung (2) abgewandten Seite ein axial verschiebbarer Stellkolben (6) vorgesehen ist, an dessen zur Aufnahmeöffnung (2) weisender Stirnfläche (6.1) einerseits und einem radial einwärts am freien Öffnungsrand (5) vorstehenden Ringwulst (7) andererseits der Packtulpeneinsatz (3) axial anliegt und an dessen der Aufnahmeöffnung (2) entgegengesetzter Seite ein das Tulpengehäuse (4) stirnseitig schließender Aufnahmeflansch (14) angeordnet ist, der mit dem Tulpengehäuse (4) fest verbunden, dabei gegen dieses abgedichtet und mit einer Einlaßöffnung (16) für ein gasförmiges oder flüssiges Druckmedium zur Verstellung des Stellkolbens (6) versehen ist, wobei der Packtulpeneinsatz (3) von einer im wesentlichen zylindrische Gestalt aufweisenden Hülse gebildet ist, dadurch gekennzeichnet, daß der Packtulpeneinsatz (3) mit mehreren, über den Umfang gleichmäßig verteilt angeordneten Durchbrüchen (8) versehen ist.

2. Greifvorrichtung nach Anspruch 1, dadurch gekennzeichnet, daß der Packtulpeneinsatz (3) sich von seinen beiden Stirnseiten aus in seiner Querschnittsfläche geringfügig verjüngt, so daß er die Gestalt zweier kegelstumpfförmiger Hülsenteile mit kleinem Kegelwinkel aufweist, wobei die beiden Hülsenteile an ihrer jeweils kleineren Querschnittsfläche aneinandergrenzen und dort eine Sollbiegelinie (9) bilden und wobei die Durchbrüche (8) im wesentlichen symmetrisch zur Sollbiegelinie (9) angeordnet sind.

3. Greifvorrichtung nach Anspruch 2, dadurch gekennzeichnet, daß die Sollbiegelinie (9) in der zum Öffnungsrand (5) weisenden Hälfte des Packtulpeneinsatzes (3) angeordnet ist.

4. Greifvorrichtung nach einem der Ansprüche 1 bis 3, dadurch gekennzeichnet, daß der Packtulpeneinsatz (3) drei Durchbrüche (8) von kreisförmiger Gestalt besitzt, deren Durchmesser etwa ein Sechstel der Umfangslänge des Packtulpeneinsatzes (3) beträgt.

5. Greifvorrichtung für Flaschen und dergl., insbesondere für Flaschen mit einem Kronen- oder Schraubverschluß, mit einem Packkopf und mehreren daran angeschlossenen Packtulpen (1), die jeweils eine Aufnahmeöffnung (2) für die zu greifende Flasche sowie einen in der Aufnahmeöffnung (2) umfangsseitig angeordneten elastischen Packtulpeneinsatz (3) aufweisen, der zum Klemmen der Flasche radial in die lichte Querschnittsfläche der Aufnahmeöffnung (2) vorverstellbar ist, wobei im Tulpengehäuse (4) der Packtulpe (1) auf der dem freien Öffnungsrand (5) der Aufnahmeöffnung (2) abgewandten Seite ein axial verschiebbarer Stellkolben (6) vorgesehen ist, an dessen zur Aufnahmeöffnung (2) weisender Stirnfläche (6.1) einerseits und einem radial einwärts am freien Öffnungsrand (5) vorstehenden Ringwulst (7) andererseits der Packtulpeneinsatz (3) axial anliegt und an dessen der Aufnahmeöffnung (2) entgegengesetzter Seite ein das Tulpengehäuse (4) stirnseitig schließender Aufnahmeflansch (14) angeordnet ist, der mit dem Tulpengehäuse (4) fest verbunden, dabei gegen dieses abgedichtet und mit einer Einlaßöffnung (16) für ein gasförmiges oder flüssiges Druckmedium zur Verstellung des Stellkolbens (6) versehen ist, dadurch gekennzeichnet, daß der Packtulpeneinsatz (3) von mehreren, sich in axialer Richtung erstreckenden Lamellenteilen (10) gebildet ist.

6. Greifvorrichtung nach Anspruch 5, dadurch gekennzeichnet, daß die Lamellenteile (10) als Zylinderschalen ausgebildet sind, deren Zylinderachse parallel zur Achse der Aufnahmeöffnung (2) verläuft und deren konkave Fläche ebenfalls zur Achse der Aufnahmeöffnung (2) weist, wobei die Zylinderschalen im Querschnitt etwa die Gestalt eines Drittelkreises besitzen, dessen Durchmesser so gewählt ist, daß die jeweils Anlagelinien an der Flasche bildenden Längsränder gleichmäßig über den Umfang der Aufnahmeöffnung (2) verteilt angeordnet sind.

7. Greifvorrichtung nach den Ansprüchen 1 bis 6, dadurch gekennzeichnet, daß der Stellkolben 6 von einer Kolbenplatte (6.2) mit einem zum Öffnungsrand (5) weisenden Ringflansch (6.3) gebildet ist, wobei der Packtulpeneinsatz (3) radial innenseitig dem Ringflansch (6.3) anliegt und daß auf der der Aufnahmeöffnung (5) abgewandten Seite der Kolbenplatte (6.2) eine durch ein axial zentral angeordnetes, mit dem Stellkolben (6) fest verbundenes Spannstück (11) gehaltene Topfmanschette (12) angeordnet ist.

8. Greifvorrichtung nach den Ansprüchen 1 bis 7, dadurch gekennzeichnet, daß am Tulpengehäuse (4) auf der dem Öffnungsrand (5) zugewandten Seite des Stellkolbens (6) ein radial nach innen vorstehender Ringvorsprung (13) angeordnet ist, der einen Anschlag für den Stellkolben (6) bildet.

## Claims

1. A gripping apparatus for bottles and the like, in particular for bottles with a crown or screw closure, comprising a gripping head and a plurality of gripping tulip members (1) which are connected thereto and which each have a respective receiving opening (2) for the bottle to be gripped and an elastic gripping tulip member insert (3) which is arranged in the receiving opening (2) at the periphery thereof and which can be advanced radially into the internal cross-sectional area of the receiving opening (2) for clamping the bottle, wherein provided in the tulip housing (4) of the gripping tulip member (1) on the side which is remote from the free edge (5) of the receiving opening (2) is an axially displaceable control piston (6), the gripping tulip member insert (3) bearing axially against the face (6.1) of the piston (6), which faces towards the receiving opening (2), on the one hand, and against an annular rim portion (7) which projects radially inwardly at the free edge (5) of the opening, on the other hand, while arranged at the side of the piston (6) which is opposite the receiving opening (2) is a receiving flange (14) which closes the tulip member housing (4) at its end and which is fixedly connected to the tulip member housing (4) and is sealed relative thereto and is provided with an inlet opening (16) for a gaseous or liquid pressure medium for displacement of the control piston (6), wherein the gripping tulip member insert (3) is formed by a sleeve which is of substantially cylindrical configuration, characterised in that the gripping tulip member insert (3) is provided with a plurality of apertures (8) which are arranged distributed uniformly around its periphery.

2. A gripping apparatus according to claim 1 characterised in that the gripping tulip member insert (3) decreases slightly in its cross-sectional area from its two ends so that it presents the configuration of two frustoconical sleeve portions with a small cone angle, wherein the two sleeve portions meet at their respective smaller cross-sectional areas and there form a desired-bending line (9), and wherein the apertures (8) are arranged substantially symmetrically relative to the desired-bending line (9).

3. A gripping apparatus according to claim 2 characterised in that the desired-bending line (9) is arranged in the half of the gripping tulip member insert (3), which is towards the edge (5) of the receiving opening (2).

4. A gripping apparatus according to one of claims 1 to 3 characterised in that the gripping tulip member insert (3) has three apertures (8) of circular configuration, the diameter of which is approximately one sixth of the peripheral length of the gripping tulip member insert (3).

5. A gripping apparatus for bottles and the like, in particular for bottles with a crown or screw closure, comprising a gripping head and a plurality of gripping tulip members (1) which are connected thereto and which each have a respective receiving opening (2) for the bottle to be gripped and an elastic gripping tulip member insert (3) which is arranged in the receiving opening (2) at the perpihery thereof and which can be advanced radially into the internal cross-sectional area of the receiving opening (2) for clamping the bottle, wherein provided in the tulip housing (4) of the gripping tulip member (1) on the side which is remote from the free edge (5) of the receiving opening (2) is an axially displaceable control piston (6), the gripping tulip member insert (3) bearing axially against the face (6.1) of the piston (6), which faces towards the receiving opening (2), on the one hand, and against an annular rim portion (7) which projects radially inwardly at the free edge (5) of the opening, on the other hand, while arranged at the side of the piston (6) which is opposite the receiving opening (2) is a receiving flange (14) which closes the tulip member housing (4) at its end and which is fixedly connected to the tulip member housing (4) and is sealed relative thereto and is provided with an inlet opening (16) for a gaseous or liquid pressure medium for displacement of the control piston (6), characterised in that the gripping tulip member insert (3) is formed by a plurality of bar portions (10) which extend in the axial direction.

6. A gripping apparatus according to claim 5 characterised in that the bar portions (10) are in the form of cylindrical shell members, the axis of the cylinder of which extends parallel to the axis of the receiving opening (2) while the concave surface thereof also faces towards the axis of the receiving opening (2), wherein the cylindrical shell members are in cross-section approximately in the form of a third of a circle, the diameter of which is so selected that the longitudinal edges forming respective lines at which they bear against the bottle are arranged distributed uniformly over the periphery of the receiving opening (2).

7. A gripping apparatus according to claims 1 to 6 characterised in that the control piston (6) is formed by a piston plate (6.2) with an annular flange (6.3) which faces towards the edge (5) of the receiving opening, wherein the gripping tulip member insert (3) bears radially against the annular flange (6.3) at its inside, and that arranged on the side of the piston plate (6.2) which is remote from the receiving opening (5) is a cup seal (12) which is held by an axially centrally disposed clamping portion (11) which is fixedly connected to the control piston (6).

8. A gripping apparatus according to claims 1 to 7 characterised in that arranged on the tulip member housing (4) on the side of the control piston (6) which is towards the edge (5) of the opening is a radially inwardly projecting annular projection (13) which forms a stop for the control piston (6).

## Revendications

1. Dispositif de préhension pour bouteilles et analogues, notamment pour des bouteilles comportant un dispositif de fermeture à bouchon-couronne ou à vis, comportant une tête d'emballage et plusieurs tulipes d'emballage (1) raccordées à la tête d'emballage et qui possèdent chacune une ouverture de réception (2) pour la bouteille devant être saisie, ainsi qu'un insert élastique (3) disposé de manière à s'étendre sur la périphérie dans l'ouverture de réception (2) et qui, pour le serrage de la bouteille, peut être préalablement déplacé radialement dans la surface en coupe transversale libre de l'ouverture de réception (2), et dans lequel dans le boîtier (4) de la tulipe d'emballage (1) est prévu, sur le côté tourné à l'opposé du bord libre (5) de l'ouverture de réception (2), un piston de réglage (6) déplaçable axialement, l'insert (3) de la tulipe d'emballage s'applique axialement d'une part contre la surface frontale (6.1) de ce piston, qui est tournée vers l'ouverture de réception (2), et d'autre part contre un rebord annulaire (7) qui fait saillie radialement vers l'intérieur au niveau du bord libre (5) de l'ouverture, alors que sur le côté du piston, tourné à l'opposé de l'ouverture de réception (2), est disposée une bride de réception (14) qui ferme frontalement le boîtier (4) de la tulipe, est raccordée rigidement à ce boîtier (4), est étanchéifiée par rapport à ce dernier et est pourvue d'une ouverture d'admission (16) pour un milieu gazeux ou liquide sous pression servant à déplacer le piston de réglage (6), et l'insert (3) de la tulipe d'emballage est formé par une douille possédant une configuration sensiblement cylindrique, caractérisé en ce que l'insert (3) de la tulipe d'emballage est pourvu de plusieurs passages (8) répartis uniformément sur la périphérie.

2. Dispositif de préhension selon la revendication 1, caractérisé en ce que la surface en coupe transversale de l'insert (3) de la tulipe d'emballage se rétrécit à partir de ses deux faces frontales de sorte que l'insert possède la forme de deux éléments de douille tronconiques possédant un faible angle au sommet, les deux éléments de douille étant contigus au niveau de leurs surfaces en coupe transversale respectivement les plus petites et y formant une ligne de flexion de consigne (9), tandis que les passages (8) sont disposés essentiellement symétriquement par rapport à la ligne de flexion de consigne (9).

3. Dispositif de préhension selon la revendication 2, caractérisé en ce que la ligne de flexion de consigne (9) est disposée dans la moitié, tournée vers le bord (5) de l'ouverture, de l'insert (3) de la tulipe d'emballage.

4. Dispositif de préhension selon l'une des revendications 1 à 3, caractérisé en ce que l'insert (3) de la tulipe d'emballage possède trois passages (8) ayant une forme circulaire et dont le diamètre est égal approximativement à un sixième de la longueur circonférentielle de l'insert (3).

5. Dispositif de préhension pour bouteilles et analogues, notamment pour des bouteilles comportant un dispositif de fermeture à bouchon-couronne ou à vis, comportant une tête d'emballage et plusieurs tulipes d'emballage (1) raccordées à la tête d'emballage et qui possèdent chacune une ouverture de réception (2) pour la bouteille devant être saisie, ainsi qu'un insert élastique (3) disposé de manière à s'étendre sur la périphérie dans l'ouverture de réception (2) et qui, pour le serrage de la bouteille, peut être préalablement déplacé radialement dans la surface en coupe transversale libre de l'ouverture de réception (2), et dans lequel dans le boîtier (4) de la tulipe d'emballage (1) est prévu, sur le côté tourné à l'opposé du bord libre (5) de l'ouverture de réception (2), un piston de réglage (6) déplaçable axialement, l'insert (3) de la tulipe d'emballage s'applique axialement d'une part contre la surface frontale (6.1) de ce piston, qui est tournée vers l'ouverture de réception (2), et d'autre part contre un rebord annulaire (7) qui fait saillie radialement vers l'intérieur au niveau du bord libre (5) de l'ouverture, alors que sur le côté du piston, tourné à l'opposé de l'ouverture de réception (2), est disposée une bride de réception (14) qui ferme frontalement le boîtier (4) de la tulipe, est raccordée rigidement à ce boîtier (4), est étanchéifiée par rapport à ce dernier et est pour-vue d'une ouverture d'admission (16) pour un milieu gazeux ou liquide sous pression servant à déplacer le piston de réglage (6), caractérisé en ce que l'insert (3) de la tulipe d'emballage est formé par plusieurs éléments en forme de lamelles (10) qui s'étendent dans la direction axiale.

6. Dispositif de préhension selon la revendication 5, caractérisé en ce que les éléments en forme de lamelles (10) sont réalisés sous la forme de coques cylindriques, dont l'axe est parallèle à l'axe de l'ouverture de réception (2) et dont la surface concave est également tournée en direction de l'axe de l'ouverture de réception (2), les coques cylindriques possédant une section transversale ayant approximativement la forme d'un tiers de cercle, dont le diamètre est choisi de manière que les bords longitudinaux, qui constituent respectivement des lignes d'application contre la bouteille, sont réparties uniformément sur le pourtour de l'ouverture de réception (2).

7. Dispositif de préhension selon les revendications 1 à 6, caractérisé en ce que le piston de réglage (6) est formé par une plaque (6.2) comportant une bride annulaire (6.3), qui est tournée vers le bord (5) de l'ouverture, l'insert (3) de la tulipe d'emballage s'appliquant sur le côté intérieur du point de vue radial contre une bride annulaire (6.3), et que sur la face, tournée à l'opposé de l'ouverture de réception (5), de la plaque (6.2) du piston est disposé un manchon en forme de pot (12) maintenu par un élément de serrage central axial (11) raccordé rigidement au piston de réglage (6).

8. Dispositif de préhension selon les revendications 1 à 7, caractérisé en ce que sur le boîtier (4) de la tulipe est disposée, et ce sur la face du piston de réglage (6), tournée vers le bord (5) de l'ouverture, une partie saillante annulaire (13) qui fait saillie radialement vers l'intérieur et forme une butée pour le piston de réglage (6).
